# EUROPÄISCHE PATENTSCHRIFT

(11) **EP 1 501 708 B1**
(45) Veröffentlichungstag und Bekanntmachung des Hinweises auf die Patenterteilung: **04.01.2006**
(21) Anmeldenummer: 03735355.4
(22) Anmeldetag: 02.05.2003
(51) Int. Cl.: B60R 22/405, B60R 22/38, B60R 22/40, B60R 22/41

(54) **SICHERHEITSGURTAUFROLLER MIT ABSCHALTBAREM FAHRZEUGSENSOR**
SEAT BELT RETRACTOR COMPRISING A VEHICLE SENSOR THAT CAN BE DEACTIVATED
ENROULEUR DE CEINTURE DE SECURITE PRESENTANT UN CAPTEUR DE VEHICULE QUI PEUT ETRE DECONNECTE

(30) Priorität: 04.05.2002 DE 10220043
(43) Veröffentlichungstag der Anmeldung: 02.02.2005
(73) Patentinhaber: AUTOLIV DEVELOPMENT AB, 447 83 Vargarda (SE)
(72) Erfinder: JABUSCH, Ronald, 25336 Elmshorn (DE)
(74) Vertreter: Müller, Karl-Ernst
(86) Internationale Anmeldenummer: PCT/EP2003/004628
(87) Internationale Veröffentlichungsnummer: WO 2003/093073

(56) Entgegenhaltungen:
- DE-A- 19 960 554
- US-A- 5 348 248
- US-A- 6 109 556

## Beschreibung

Die Erfindung betrifft einen selbstsperrenden Gurtaufroller, insbesondere für Kraftfahrzeuge, mit einem fahrzeugsensitiven und/oder gurtbandsensitiven Steuersystem für eine Blockiereinrichtung des Gurtaufrollers, wobei das Steuersystem eine sich mit der Gurtwelle drehende außenverzahnte Steuerscheibe zum Zusammenwirken mit einem einen Sensorhebel aufweisenden Fahrzeugsensor umfaßt und eine von der Gurtwelle angetriebene, sich an einer gehäusefesten Gegenverzahnung abwälzende außenverzahnte Exzenterscheibe mit einer daran ausgebildeten Schalteinrichtung vorgesehen ist.

Ein selbstsperrender Gurtaufroller mit den gattungsgemäßen Merkmalen ist in der DE 199 60 554 A1 beschrieben. Die zusätzlich zu der Steuerscheibe vorgesehene Exzenterscheibe mit Schalteinrichtung dient dabei zur Umschaltung des Steuersystems für die Blockiereinrichtung des Gurtaufrollers zwischen dem sogenannten ELR (Emergency Locking Retractor)-Betrieb und dem sogenannten ALR (Automatic Locking Retractor)-Betrieb. Ausgehend von dem Aufwickelzustand des Gurtbandes geschieht dabei ein Gurtbandauszug zunächst im sogenannten ELR-Betrieb, bei welchem das gurtbandsensitive bzw. fahrzeugsensitive Steuersystem wirksam ist, indem ein zu schneller Gurtbandauszug oder Fahrzeugbeschleunigungen bzw. Fahrzeugverzögerungen über ein Ansprechen der Sensorik zu einer Blockierung der Steuerscheibe führen, wobei die damit verbundene Relativbewegung zwischen der festgesetzten Steuerscheibe und der sich weiterdrehenden Gurtwelle in die Ansteuerung der Blockiereinrichtung umgesetzt wird. Wird ein über die Drehung der Exzenterscheibe als Untersetzungseinrichtung vorher festgelegter Gurtbandauszug erreicht, so wird mittels der an der Exzenterscheibe eingerichteten Schalteinrichtung auf den ALR-Betrieb umgeschaltet, bei dem über eine während dieses Schaltzustandes dauerhafte Festlegung der Steuerscheibe sichergestellt ist, daß jeder weitere Gurtbandauszug sofort zu einem Ansprechen der Blockiereinrichtung führt. Dieser ALR-Betrieb kommt insbesondere zur Anwendung, wenn mittels des Sicherheitsgurtsystems ein Kindersitz im Kraftfahrzeug festgelegt werden soll und somit ein weiterer, auch langsamer Gurtbandauszug gemäß ELR-Betrieb nicht zulässig ist.

Bei dem Einbau von Gurtaufrollern in Kraftfahrzeugen besteht unabhängig von der Einrichtung einer ELR/ALR-Umschaltung das Problem, daß mit dem Einbau des Gurtaufrollers in eine klappbare Rückenlehne von Fahrzeugsitzen es während der Klappbewegung der Rückenlehne zu einer Blockierung des Gurtaufrollers kommen kann, weil der Fahrzeugsensor seine Lage ändert. Es kann Gurtband in den Gurtaufroller einlaufen, und bei blockiertem Gurtaufroller kann die Lehne nicht wieder zurückgeklappt werden. Um dieses zu verhindern, ist es bekannt, an dem Gurtband einen Gurtknopf anzubringen, der das Einlaufen des Gurtbandes bei Lehnenklappung verhindert. Damit ist jedoch der Nachteil verbunden, daß sich aufgrund der durch die Anordnung des Gurtknopfes festgelegten Gurtlose eine Gurtschlaufe bildet, welche störend ist.

Eine weitere Möglichkeit besteht darin, den Fahrzeugsensor bei abgelegtem Gurtband abzuschalten, so daß eine Veränderung der Lage des Gurtaufrollers mit Fahrzeugsensor bei abgelegtem Gurtband durch das Klappen der Rückenlehne nicht mehr zu einem Ansprechen der Blockiereinrichtung führen kann. Der Erfindung liegt daher die Aufgabe zugrunde, für einen selbstsperrenden Gurtaufroller ein einfaches Abschaltsystem für den Fahrzeugsensor bereitzustellen.

Die Lösung dieser Aufgabe ergibt sich einschließlich vorteilhafter Ausgestaltungen und Weiterbildungen aus dem Inhalt der Patentansprüche, welche dieser Beschreibung nachgestellt sind.

Die Erfindung sieht in ihrem Grundgedanken vor, bei einem Gurtaufroller mit den gattungsgemäßen Merkmalen an der Exzenterscheibe einen Schaltpin anzuordnen, der bei vollständig eingezogenem Gurtband aufgrund der dadurch definierten Stellung der Exzenterscheibe eine Schaltkontur eines am Gehäuse drehbar gelagerten Schaltringes derart beaufschlagt, daß ein am Schaltring angeordneter Sperransatz den Sensorhebel des Fahrzeugsensor außer Eingriff mit der Außenverzahnung der Steuerscheibe hält, wobei der Schaltpin bei sich in Gurtauszugsrichtung drehender Exzenterscheibe über die Schaltkontur den Schaltring in dessen Freigabestellung für den Sensorhebel dreht.

Hiermit macht sich die Erfindung einen Teil der für die ELR/ALR-Umschaltung bei einem Gurtaufroller eingerichteten Bauteile zunutze, um die Abschaltung des Fahrzeugsensors zu bewirken. Da bei abgelegtem Gurtband eine Umschaltung von ALR auf ELR-Betrieb erfolgt bzw. erfolgt ist, wird die dafür vorgesehene Schalteinrichtung bei einem gattungsgemäßen Gurtaufroller herangezogen, um einen erfindungsgemäß vorgesehenen zusätzlichen Schaltring zu steuern, der seinerseits bei abgelegtem und vollständig aufgewickelten Gurtband für die Festlegung bzw. bei Gurtbandauszug für die Freigabe des Fahrzeugsensors sorgt.

Mit der Erfindung ist dabei der Vorteil verbunden, daß hinsichtlich der Abschaltung des Fahrzeugsensors auf bereits existierende Bauteile zurückgegriffen werden kann und lediglich als neues Bauteil der Schaltring mit Schaltkontur und Sperransatz an dem Gehäusedeckel drehbar anzuordnen ist. Somit können mit den vorhandenen Bauteilen bzw. dem neuen erfindungsgemäßen Bauteil Gurtaufroller entweder mit ELR/ALR-Umschaltung oder mit einer Abschaltung des Fahrzeugsensors oder aber mit einer Kombination der beiden Steuersysteme aufgelegt werden.

Soweit dazu in der gattungsbildenden DE 199 60 554 bereits beschrieben ist, den für die ELR/ALR-Umschaltung herangezogenen, drehfest an die Exzenterscheibe gekoppelten Nockenring auch für andere Steuerfunktionen wie die Ansteuerung eines Gurtstraffers zu nutzen, so ist der bekannte Aufbau kompliziert und für die in der DE 199 60 554 A1 nicht erwähnte und nicht als zweckmäßig erkannte Abschaltung des Fahrzeugsensors nicht nutzbar.

Nach einem Ausführungsbeispiel der Erfindung ist vorgesehen, daß die gehäusefeste Gegenverzahnung für die außenverzahnte Exzenterscheibe an einem Gehäusedeckel des Gurtaufrollers angeordnet und der Schaltring die gehäusefeste Gegenverzahnung umgreifend drehbar an dem Gehäusedeckel gelagert ist.

Es kann vorgesehen sein, daß die Schaltkontur des Schaltringes aus einem axial von dem Schaltring vorstehenden und die Exzenterscheibe übergreifenden Ansatz besteht und der axial von der Exzenterscheibe abstehende Schaltpin bis in die Ebene des Ansatzes reicht.

Soweit nach einem Ausführungsbeispiel der Erfindung vorgesehen ist, daß die axial neben der Exzenterscheibe angeordnete Steuerscheibe auf ihrer der Exzenterscheibe zugewandten Seite mit einer Stirnverzahnung versehen ist und am Gehäusedeckel ein zwischen der Exzenterscheibe und der Steuerscheibe angeordneter und zwischen einer Eingriffsstellung mit der Stirnverzahnung der Steuerscheibe und einer Freigabestellung schwenkbarer Schalthebel gelagert ist, der von dem an der Exzenterscheibe angeordneten Schaltpin und einem weiteren, an der Exzenterscheibe angeordneten Schaltnocken bei Drehung der Exzenterscheibe zwischen seinen Schaltzuständen hin und her bewegt wird, wird hierdurch die einfache und zweckmäßige Kombination der erfindungsgemäßen Abschaltung des Fahrzeugsensors mit der an sich bekannten ELR/ALR-Umschaltung beschrieben, wie vorstehend im einzelnen erläutert worden ist. Dabei ist insbesondere vorgesehen, daß der Schaltpin der Exzenterscheibe den Schalthebel bei Drehung der Exzenterscheibe in Aufwickelrichtung des Gurtbandes außer Eingriff mit der Stirnverzahnung der Steuerscheibe steuert.

Wird bei einem erfindungsgemäßen Aufbau des Gurtaufrollers auf den zwischen Exzenterscheibe und Steuerscheibe angeordneten Schalthebel verzichtet, kommt eine Umschaltmöglichkeit zwischen ELR/ALR-Betrieb nicht zum Tragen. Bei Verzicht auf den Schalthebel können aber alle übrigen Bauteile wie die mit der Stirnverzahnung versehene Steuerscheibe sowie die mit dem Schaltpin und dem auch vorgesehenen Schaltnocken versehene Exzenterscheibe unverändert bleiben. Soll entsprechend eine Abschaltung des Fahrzeugsensors nicht vorgesehen werden, so wird der am Gehäusedeckel gelagerte Schaltring weggelassen.

In der Zeichnung sind Ausführungsbeispiel der Erfindung wiedergegeben, welche nachstehend beschrieben sind. Es zeigen:
- Fig. 1: eine Ansicht der Innenseite des Gehäusedeckels eines Gurtaufrollers mit der daran angeordneten Abschaltvorrichtung für den Fahrzeugsensor einschließlich einer ELR/ALR-Umschaltung,
- Fig. 2: den Gegenstand der Figur 1 in einer Seitenansicht bei abgeschaltetem Fahrzeugsensor,
- Fig. 3: den Gegenstand der Figur 2 bei zugeschaltetem Fahrzeugsensor.

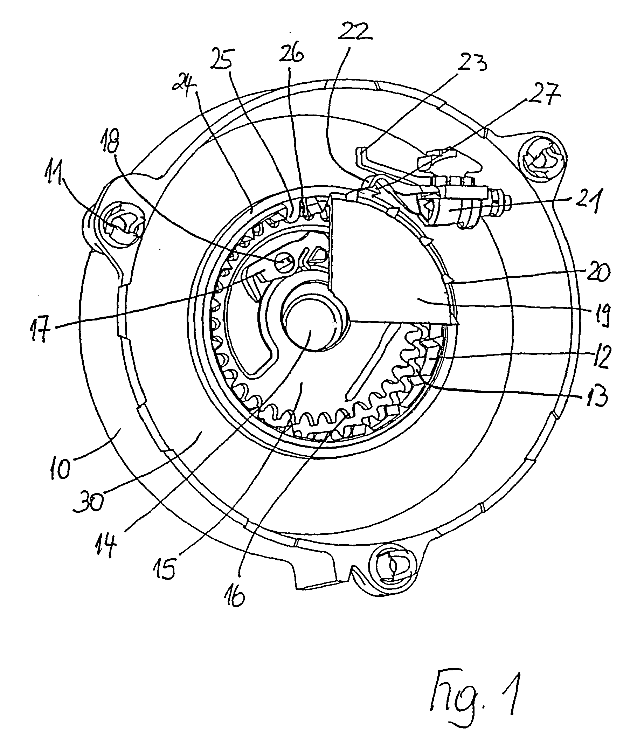

Der aus Figur 1 ersichtliche Gehäusedeckel 10 weist an seinem Umfang drei Befestigungsklipse 11 auf, mit denen der Gehäusedeckel 10 als Träger der noch zu beschreibenden Funktionselemente an dem nicht dargestellten Rahmen eines selbstsperrenden Gurtaufrollers befestigt wird. An der Innenseite der Stirnwand 30 des topfförmigen Gehäusedeckels 10 ist ein axial vorstehender Kragen 12 mit einer daran ausgebildeten Innenverzahnung 13 angeordnet. In dem von der Innenverzahnung 13 umschlossenen Raum ist eine Exzenterscheibe 15 mit einer an dieser ausgebildeten Außenverzahnung 16 angeordnet, zu der die Innenverzahnung 13 als Gegenverzahnung wirkt. Die Exzenterscheibe 15 weist eine Öffnung 14 zum Eingriff des Schaftendes einer nicht dargestellten Gurtwelle auf, so daß bei einer Drehung der Gurtwelle die Exzenterscheibe 15 in eine umlaufende und sich dabei an der Innenverzahnung 13 als gehäusefeste Gegenverzahnung abwälzende Drehbewegung versetzt wird.

Axial neben der Exzenterscheibe 15 ist eine ebenfalls auf dem Wellenschaft der Gurtwelle gelagerte Steuerscheibe 19 mit einer an dieser ausgebildeten Außenverzahnung 20 angeordnet, wobei der Steuerscheibe 19 ein Fahrzeugsensor 21 zugeordnet ist, dessen Sensorhebel 22 bei Ansprechen des Fahrzeugsensors 21 in Eingriff mit der Außenverzahnung 20 der Steuerscheibe 19 gelangt. Der aus Figur 1 ersichtliche Fahrzeugsensor 21 ist in einer nicht dargestellten Weise an dem Rahmen des Gurtaufrollers befestigt, wobei eine Montagehilfe 23 an dem Fahrzeugsensor 21 ausgebildet ist, die für dessen Funktion ohne Belang ist.

In dem Zwischenraum zwischen der Exzenterscheibe 15 und der Steuerscheibe 19 ist auf einer an dem Gehäusedeckel 10 ausgebildeten Lagerstelle 18 ein Schalthebel 17 schwenkbar gelagert, der in seiner einen Schaltstellung in Eingriff mit einer in Figur 1 nicht erkennbaren, an der der Exzenterscheibe 15 zugewandten Stirnseite der Steuerscheibe 19 ausgebildeten Stirnverzahnung steht. In der anderen Schaltstellung gibt der Schalthebel 17 die Steuerscheibe 19 frei. Der Schalthebel 17 wird von der umlaufenden Exzenterscheibe 15 über einen an dieser vorgesehenen Schaltpin 26 derart beaufschlagt, daß der Schaltpin 26 als Ausschaltpin wirkt und den Schalthebel 17 außer Eingriff mit der Stirnverzahnung der Steuerscheibe 19 steuert, wobei diese Schaltzustände im einzelnen noch zu erläutern sind.

An dem Gehäusedeckel 10 ist ein den vorstehenden Kragen 12 außen umgreifener Schaltring 24 drehbar gelagert, der einen radial von dem Schaltring 24 vorstehenden und die Exzenterscheibe 15 übergreifenden Ansatz als Schaltkontur 25 aufweist, so daß der von der Exzenterscheibe 15 radial abstehende Schaltpin 26 mit der Schaltkontur 25 zusammenwirkt. Auf seinem äußeren Umfang weist der Schaltring 24 einen radial abstehenden Sperransatz 27 auf, der in zumindest einer Schaltstellung des Schaltringes 24 den Sensorhebel 22 des Fahrzeugsensors 21 außer Eingriff mit der Außenverzahnung 20 der Steuerscheibe 19 hält.

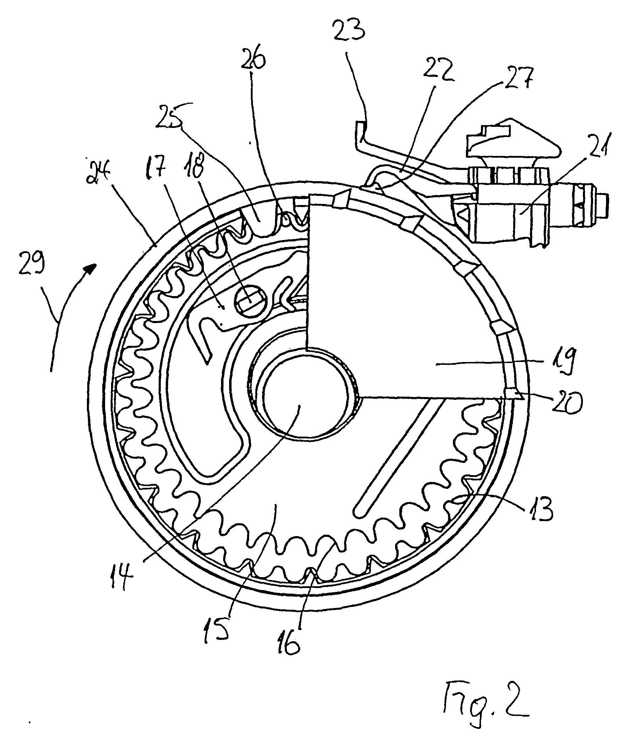

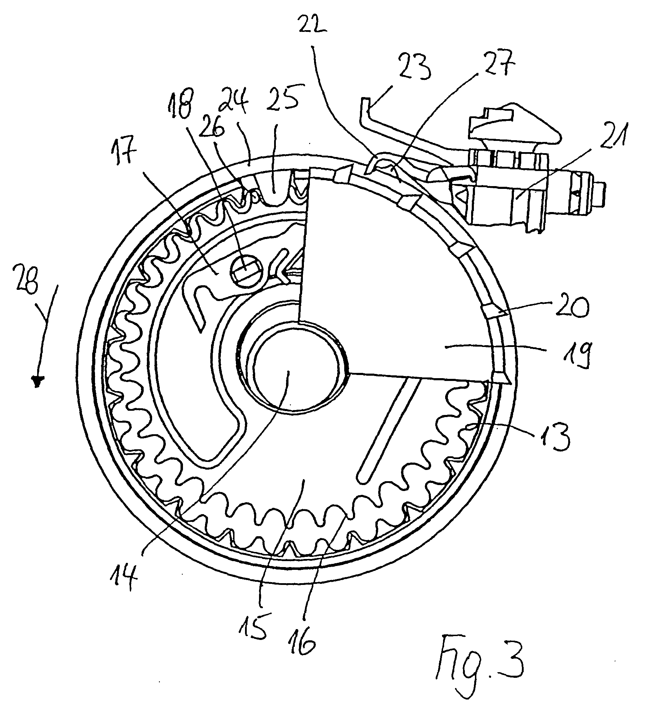

Zunächst sei anhand der Figuren 2 und 3 die Abschaltung bzw. Zuschaltung des Fahrzeugsensors 21 beschrieben. Hierbei zeigt Figur 2 den abgeschalteten Zustand des Fahrzeugsensors 21, bei dem der Sperransatz 27 des Schaltrings 24 unter dem Sensorhebel 22 liegt und diesen nach außen außer Eingriff mit der Außenverzahnung 20 der Steuerscheibe 19 hält. Dieser Schaltzustand ist dadurch herbeigeführt, daß beim Gurtbandeinlauf bis zum vollständigen Aufwickeln des Gurtbandes sich die Exzenterscheibe 15 in Richtung des Pfeils 29 gedreht hat, so daß der Schaltpin 26 die Schaltkontur 25 des Schaltringes 24 in Richtung des Pfeils 29 beaufschlagt und in eine Stellung gedreht hat, in welcher der Sperransatz 27 seine Sperrfunktion für den Sensorhebel 22 ausübt. Damit ist bei aufgewickeltem Gurtband sichergestellt, daß auch bei einer Veränderung der Lage des Gurtaufrollers die Blockiereinrichtung nicht ansprechen kann. Wird nun Gurtband aus dem Gurtaufroller ausgezogen, so dreht sich die Exzenterscheibe 15 mit Schaltpin 26 in Richtung des Pfeils 28 und trifft wiederum in der zu Figur 2 entgegengesetzten Drehrichtung auf die Schaltkontur 25 des Schaltringes 24 und dreht den Schaltring 24 in die aus Figur 3 ersichtliche Stellung, in welcher der Sensorhebel 22 des Fahrzeugsensors 21 freigegeben ist, so daß bei Ansprechen der Sensorik über die Funktion der Steuerscheibe 19 die Blockiereinrichtung des Gurtaufrollers ansprechen kann.

Bei dem dargestellten Ausführungsbeispiel ist zusätzlich eine ELR/ALR-Umschaltung verwirklicht, weil der Schalthebel 17 vorgesehen ist. Ist das Gurtband abgelegt, so hat der Schaltpin 26 den Schalthebel 17 in dessen Stellung geschwenkt, in welcher kein Eingriff des Schalthebels 17 mit der Stirnverzahnung der Steuerscheibe 19 erfolgt; die Steuerscheibe 19 kann sich gegenüber dem Schalthebel 17 frei drehen. Erfolgt nun ein Gurtbandauszug bis zu einem über die Anzahl der Drehungen der Exzenterscheibe 15 bestimmten Maß, so kommt ein in der Zeichnung nicht ersichtlicher weiterer Schaltnocken als Zuschaltnocken in Eingriff mit dem Schalthebel 17 und verschwenkt diesen in seiner Eingriffsstellung mit der Stirnverzahnung der Steuerscheibe 19, so daß die Steuerscheibe 19 dauerhaft festgelegt ist. Wie zuvor beschrieben, handelt es sich dabei um den ALR-Betrieb des Gurtaufrollers, in welchem bei weiterem Gurtbandauszug die Blockiereinrichtung sofort anspricht.

Wird der Schalthebel 17 in der im übrigen unveränderten, aus den Figuren ersichtlichen Konstruktion nicht eingesetzt, so findet keine ELR/ALR-Umschaltung statt. Andererseits führt ein Weglassen des Schaltringes 24 dazu, daß die Funktion "Abschaltung des Fahrzeugsensors" nicht verwirklicht ist. Somit ist in einfacher Weise und nur mit einem einzigen zusätzlichen Bauteil (Schaltring 24) eine wahlweise Auslegung des Gurtaufrollers für verschiedene Funktionszustände möglich.

Die in der vorstehenden Beschreibung, den Patentansprüchen, der Zusammenfassung und der Zeichnung offenbarten Merkmale des Gegenstandes dieser Unterlagen können sowohl einzeln als auch in beliebigen Kombinationen untereinander für die Verwirklichung der Erfindung in ihren verschiedenen Ausführungsformen wesentlich sein.

## Patentansprüche

1. Selbstsperrender Gurtaufroller, insbesondere für Kraftfahrzeuge, mit einem fahrzeugsensitiven und/oder gurtbandsensitiven Steuersystem für eine Blockiereinrichtung des Gurtaufrollers, wobei das Steuersystem eine sich mit der Gurtwelle drehende außenverzahnte Steuerscheibe (19) zum Zusammenwirken mit einem einen Sensorhebel (22) aufweisenden Fahrzeugsensor (21) umfaßt und eine von der Gurtwelle angetriebene, sich an einer gehäusefesten Gegenverzahnung (13) abwälzende außenverzahnte Exzenterscheibe (15)mit einer daran ausgebildeten Schalteinrichtung vorgesehen ist, **dadurch gekennzeichnet, daß** an der Exzenterscheibe (15) ein Schaltpin (26) als Schalteinrichtung angeordnet ist, der bei vollständig eingezogenem Gurtband aufgrund der **dadurch** definierten Stellung der Exzenterscheibe (15) eine Schaltkontur (25) eines am Gehäuse drehbar gelagerten Schaltringes (24) derart beaufschlagt, daß ein am Schaltring (24) angeordneter Sperransatz (27) den Sensorhebel (22) des Fahrzeugsensor (21) außer Eingriff mit der Außenverzahnung (20) der Steuerscheibe (19) hält, wobei der Schaltpin (26) bei sich in Gurtauszugsrichtung drehender Exzenterscheibe (15) über die Schaltkontur (25) den Schaltring (24) in dessen Freigabestellung für den Sensorhebel (22) dreht.

2. Gurtaufroller nach Anspruch 1, **dadurch gekennzeichnet, daß** die gehäusefeste Gegenverzahnung (13) für die außenverzahnte Exzenterscheibe (15) an einem Gehäusedeckel (10) des Gurtaufrollers angeordnet und der Schaltring (24) die gehäusefeste Gegenverzahnung (13) umgreifend drehbar an dem Gehäusedeckel (10) gelagert ist.

3. Gurtaufroller nach Anspruch 1 oder 2, **dadurch gekennzeichnet, daß** die Schaltkontur (25) des Schaltringes (24) aus einem axial von dem Schaltring (24) vorstehenden und die Exzenterscheibe (15) übergreifenden Ansatz besteht und der axial von der Exzenterscheibe (15) abstehende Schaltpin (26) bis in die Ebene des Ansatzes (Schaltkontur 25) reicht.

4. Gurtaufroller nach einem der Ansprüche 1 bis 3, **dadurch gekennzeichnet, daß** die axial neben der Exzenterscheibe (15) angeordnete Steuerscheibe (19) auf ihrer der Exzenterscheibe (15) zugewandten Seite mit einer Stirnverzahnung versehen ist und am Gehäusedeckel (10) ein zwischen der Exzenterscheibe (15) und der Steuerscheibe (19) angeordneter und zwischen einer Eingriffsstellung mit der Stirnverzahnung der Steuerscheibe (19) und einer Freigabestellung schwenkbarer Schalthebel (17) gelagert ist, der von dem an der Exzenterscheibe (15) angeordneten Schaltpin (26) und einem weiteren, an der Exzenterscheibe angeordneten Schaltnocken bei Drehung der Exzenterscheibe (15) zwischen seinen Schaltzuständen hin und her bewegt wird.

5. Gurtaufroller nach Anspruch 4, **dadurch gekennzeichnet, daß** der Schaltpin (26) der Exzenterscheibe (15) den Schalthebel (17) bei Drehung der Exzenterscheibe (15) in Aufwickelrichtung des Gurtbandes außer Eingriff mit der Stirnverzahnung der Steuerscheibe (19) steuert.

## Claims

1. Self-locking belt retractor, especially for motor vehicles, having a vehicle sensitive and/or belt strap sensitive control system for a blocking device of the belt retractor, whereby the control system includes an externally toothed control disk (19) that rotates with the belt shaft for the cooperation with a vehicle sensor (21) having a sensor lever (22), and an externally toothed eccentric disk (15) that is driven by the belt shaft, and meshes with a counter toothing (13) that is fixed to the housing, and has a shift device formed thereon, **characterized in that** there is disposed on the eccentric disk (15) a shift pin (26) as the shift device that with the belt strap completely pulled in, due to the thereby defined position of the eccentric disk (15), acts upon a shift contour (25) of a shift ring (24) rotatably mounted on the housing in such a way that a locking projection (27) that is disposed on the shift ring (24) holds the sensor lever (22) of the vehicle sensor (21) out of engagement with the external toothing (20) of the control disk (19), whereby the shift pin (26), with the eccentric disk (15) rotating in the belt withdrawal direction, via the shift contour (25) rotates the shift ring (24) into its release position for the sensor lever (22).

2. Belt retractor according to claim 1, **characterized in that** the counter toothing (13) that is fixed to the housing for the externally toothed eccentric disk (15) is disposed on a housing cover (10) of the belt retractor, and the shift ring (24) is rotatably mounted on the housing cover (10) so as to extend about the counter toothing (13) that is fixed to the housing.

3. Belt retractor according to claim 1 or 2, **characterized in that** the shift contour (25) of the shift ring (24) comprises a projection that extends axially from the shift ring (24) and overlaps the eccentric disk (15), and the shift pin (26) that projects axially from the eccentric disk (15) extends to into the plane of the projection (shift contour 25).

4. Belt retractor according to one of the claims 1 to 3, **characterized in that** the control disk (19) that is disposed axially next to the eccentric disk (15) is provided on its side that faces the eccentric disk (15) with a radial toothing, and on the housing cover (10) a shift lever (17) is mounted that is disposed between the eccentric disk (15) and the control disk (19) and is pivotable between an engagement position with the radial toothing of the control disk (19) and a release position, the shift lever being moveable back and forth between its shift conditions during the rotation of the eccentric disk (15) by the shift pin (26) that is disposed on the eccentric disk (15) and a further shift cam that is disposed on the eccentric disk.

5. Belt retractor according to claim 4, **characterized in that** the shift pin (26) of the eccentric disk (15), upon rotation of the eccentric disk (15) in the winding-up direction of the belt strap, moves the ratchet lever (17) out of engagement with the radial toothing of the control disk (19).

## Revendications

1. Enrouleur de ceinture auto-bloquant, en particulier pour des véhicules automobiles, comprenant un système de commande sensible au véhicule et/ou sensible à la sangle pour un dispositif de blocage de l'enrouleur de ceinture, le système de commande comprenant un disque de commande (19) à denture extérieure et tournant avec l'arbre de sangle pour la coopération avec un capteur de véhicule (21) présentant un levier de capteur (22) et un disque d'excentrique (15) à denture extérieure, se déroulant d'une contre-denture (13) solidaire du boîtier et entraîné par l'arbre de sangle étant prévu avec un dispositif de commutation réalisé dessus, **caractérisé en ce qu'**une broche de commutation (26) est disposée comme dispositif de commutation sur le disque d'excentrique (15), laquelle broche sollicite, lorsque la sangle est complètement rentrée, un contour de commutation (25) d'une bague de commutation (24) logée de façon rotative sur le boîtier en raison de la position ainsi définie du disque d'excentrique (15) de telle sorte qu'une embase de blocage (27) disposée sur la bague de commutation (24) maintient le levier de capteur (22) du capteur de véhicule (21) hors prise avec la denture extérieure (20) du disque de commande (19), la broche de commutation (26) faisant tourner la bague de commutation (24) dans son sens de libération pour le levier de capteur (22) par l'intermédiaire du contour de commutation (25) lorsque le disque d'excentrique (15) tourne dans le sens de sortie de sangle.

2. Enrouleur de sangle selon la revendication 1, **caractérisé en ce que** la contre-denture (13) solidaire du boîtier pour le disque d'excentrique (15) à denture exterieure est disposée sur un couvercle de boîtier (10) de l'enrouleur de sangle et la bague de commutation (24) est logée sur le couvercle de boîtier (10) en tournant et en entourant la contre-denture (13) solidaire du boîtier.

3. Enrouleur de sangle selon la revendication 1 ou 2, **caractérisé en ce que** le contour de commutation (25) de la bague de commutation (24) se compose d'une embase débordant axialement de la bague de commutation (24) et recouvrant le disque d'excentrique (15) et la broche de commutation (26) débordant axialement du disque d'excentrique (15) ne va pas jusque dans le plan de l'embase (contour de commutation 25).

4. Enrouleur de sangle selon l'une quelconque des revendications 1 à 3, **caractérisé en ce que** le disque de commande (19) disposé à côté du disque d'excentrique (15) est pourvu d'une denture frontale sur son côté tourné vers le disque d'excentrique (15), et un levier de commutation, (17) disposé entre le disque d'excentrique (15) et le disque de commande (19) et pouvant basculer entre une position d'engagement avec la denture frontale du disque de commande (19) et une position de libération, est logé sur le couvercle de boîtier (10), lequel levier est déplacé par la broche de commutation (26) disposée sur le disque d'excentrique (15) et une autre came de commutation disposée sur le disque d'excentrique en faisant des allers et retours entre ces états de commutation en cas de rotation du disque d'excentrique (15).

5. Enrouleur de sangle selon la revendication 4, **caractérisé en ce que** la broche de commutation (26) du disque d'excentrique (15) commande le levier de commutation (17) en cas de rotation du disque d'excentrique (15) dans le sens d'enroulement de la sangle sans prise avec la denture frontale du disque de commande (19).
